# EUROPÄISCHE PATENTSCHRIFT

(11) **EP 4 151 071 B1**
(45) Veröffentlichungstag und Bekanntmachung des Hinweises auf die Patenterteilung: **30.10.2024**
(21) Anmeldenummer: 22195702.0
(22) Anmeldetag: 14.09.2022
(51) Int. Cl.: A01D 34/14, A01D 34/38, A01D 34/40, A01D 41/14, A01D 69/03

(54) **UMSCHALTBARER MESSERANTRIEB FÜR LANDWIRTSCHAFTLICHES VORSATZGERÄT**
SWITCHABLE KNIFE DRIVE FOR AGRICULTURAL HEADER
ENTRAÎNEMENT DE LAME COMMUTABLE POUR APPAREIL AGRICOLE ADAPTABLE

(30) Priorität: 17.09.2021 DE 102021124148
(43) Veröffentlichungstag der Anmeldung: 22.03.2023
(73) Patentinhaber: Carl Geringhoff GmbH & Co. Kommanditgesellschaft, 59227 Ahlen (DE)
(72) Erfinder: Sudhues, Steffen, 59227 Ahlen (DE); Pokriefke, Michael, 27798 Hude (DE)
(74) Vertreter: Weeg, Thomas

(56) Entgegenhaltungen:
- EP-A2- 2 407 020
- DE-C1- 3 344 967
- DE-U1- 8 229 997
- SU-A1- 1 516 043

## Beschreibung

Die vorliegende Erfindung bezieht sich auf ein landwirtschaftliches Vorsatzgerät mit einem von einem Hydromotor über ein Exzentergetriebe oszillierend antreibbaren Messerbalken, wobei der Hydromotor über eine Zulaufleitung und eine Rücklaufleitung an einen von einer Hydropumpe mit einer hydrostatischen Flüssigkeit beaufschlagten Hydraulikkreislauf anschließbar ist.

Aus der Schrift EP 3 152 999 B1 ist ein Messerantrieb für ein Schneidwerk zum Anbau an einen Mähdrescher bekannt. In dieser Schrift ist nicht näher angegeben, ob die Antriebskraft zum Antrieb der Antriebswellen rein mechanisch direkt vom Verbrennungsmotor des Mähdreschers oder von einem Hydromotor erzeugt wird. Aus der Schrift DE 20 2010 008 039 U1 ist es bekannt, einen Messerbalken hydraulisch anzutreiben. Aus der Schrift SU 1 516 043 A1 ist es bekannt, die Laufrichtung des Motors, der einen Messerbalken antreibt, im Falle einer Überlastung zu ändern.

Beim Betrieb von Schneidwerken, die mit einem Messerbalken versehen sind, kann es bei einem sehr dichten Bestand von Erntegut oder auch Nestern von Unkräutern dazu kommen, dass die mit dem Messerbalken bewegten Messerklingen die im Schnittbereich befindlichen und von ihnen bei einer Schnittbewegung abzuschneidenden Pflanzen nicht mehr vollständig durchschneiden. Der Messerbalken blockiert und reißt die im Messerbalken feststeckenden Pflanzen aus dem Boden, ohne dass diese der weiteren Bearbeitung zugeführt werden. Durch die Blockade des Schnittbereichs, in dem die nicht vollständig abgeschnittenen Pflanzen feststecken, können dort keine weiteren Pflanzen mehr geschnitten werden. Es entstehen also bei der weiteren Vorfahrt der Erntemaschine Schnittverluste von nicht geschnittenem Erntegut. Entsprechendes gilt für Fremdkörper wie Holzstücke, Steine und dergleichen, die in die Wirkzone des Messerbalkens geraten und dort den Messerbalken blockieren können. Hier drohen Schäden durch verbogene oder abgebrochene Messerklingen, die ihrerseits zu Erntegutverlusten und Reparaturen führen.

Es ist die Aufgabe der vorliegenden Erfindung, eine Lösung zu schaffen, wie eventuelle Blockaden des Messerbalkens auf eine möglichst einfache Weise wieder aufgehoben werden, ohne es dazu erforderlich ist, die Erntemaschine anzuhalten, die Störung manuell zu beseitigen und erst danach den Ernteprozess fortzusetzen.

Die Aufgabe wird für ein gattungsgemäßes landwirtschaftliches Vorsatzgerät gelöst, indem in den Hydraulikkreislauf ein druckabhängig schaltendes Umschaltventil integriert ist, das zumindest zwei verschiedene Schaltstellungen aufweist, zwischen denen das Umschaltventil hin und her verstellbar ist, und der Hydromotor in der ersten Schaltstellung des Umschaltventils in einer ersten Drehrichtung und in der zweiten Schaltstellung des Umschaltventils in einer der ersten Drehrichtung entgegengesetzten zweiten Drehrichtung angetrieben ist.

Die erfindungsgemäße Lösung macht sich den Umstand zunutze, dass bei einer beginnenden oder bereits vollständig eingetretenen Blockade des Messerbalkens durch zu viel Schnittgut und/oder einen Fremdkörper im Bereich der Messer der Druck in der Zulaufleitung des Hydraulikkreislaufs ansteigt, wenn sich der Messerbalken nicht mehr mit der ursprünglichen Geschwindigkeit bewegen kann, da bei einer Blockade des Messerbalkens auch die Drehgeschwindigkeit des Hydromotors verringert wird. Da der Hydromotor bei einer geringeren Drehgeschwindigkeit in einem gleichen Zeitintervall weniger Hydraulikflüssigkeit schluckt, steigt der Druck in der Zulaufleitung an. Dieser Druckanstieg wird von dem druckabhängig schaltenden Umschaltventil für eine Umschaltung der Drehrichtung des Hydromotors genutzt.

Dabei muss nicht jeder auch nur geringfügige Druckanstieg zu einer Umschaltung der Bewegungsrichtung führen. Die Umschaltung kann dabei insbesondere erst dann erfolgen, wenn der Druck in der Zuführleitung einen voreingestellten Schwellwert hinaus überschreitet. Bei der Umschaltung schaltet das Umschaltventil den Anschluss des Hydromotors an die Zulaufleitung und die Rücklaufleitung so um, dass sich die Drehrichtung des Hydromotors und damit auch die Bewegungsrichtung des Messerbalkens in die entgegengesetzte Richtung ändern.

Für den Schnittvorgang im Messerbalken bedeutet die Richtungsumkehr, dass eine in einer Schnittrichtung blockierte Messerklinge, die am angetriebenen Messerbalken befestigt ist, in die entgegengesetzte Richtung bewegt wird. Das Schnittgut, das zwischen der mit dem Messerbalken bewegten Messerklinge und einer feststehenden Messerklinge eingeklemmt war, wird dadurch freigegeben. Es wird nicht mehr aus dem Boden herausgerissen und eingeklemmt mitgenommen. Dadurch kann zumindest der bereits geschnittene Teil eines den Messerbalken blockierenden Pflanzenbüschels in das Vorsatzgerät abgefördert werden, so dass der Pflanzenverlust allein dadurch schon verringert wird. Wenn das blockierende Schnittgut aus dem Blockadebereich verschwindet, wird die zuvor blockierte Schnittzone unmittelbar wieder frei und kann für einen neuen Schnitt neues Schnittgut aufnehmen. Erntegutverluste durch ungeschnitten bleibendes Erntegut werden dadurch also auch verringert. Der Hydraulikkreislauf kann dabei so ausgelegt sein, dass eine Umkehr der Drehrichtung des Hydromotors in einer schnell wechselnden Folge auftritt, wenn sich die beweglichen Teile des Messerbalkens nicht störungsfrei hin und her bewegen lassen. Durch den schnell aufeinanderfolgenden Richtungswechsel entsteht an der Störungsstelle ein Rütteleffekt, der zusätzlich dazu beiträgt, Materialpakete und/oder Fremdkörper zu beseitigen. Durch eine mehrfache kurz aufeinanderfolgende Richtungsumkehr ist es auch möglich, Materialpakete noch durchzuschneiden, die bei einer Beibehaltung der Bewegungsrichtung aus der blockierten Stellung des Messerbalkens nicht mehr hätten durchgeschnitten werden können.

Schließlich ist auch das Risiko von Beschädigungen der Messerklingen durch Fremdkörper verringert. Wenn die Schnittbewegung einer Messerklinge auf einen im Schnittbereich befindlichen Fremdkörper zu gestoppt und die Messerklinge sodann unmittelbar in die entgegengesetzte Richtung bewegt wird, kann der Fremdkörper aus dem Wirkbereich des Messerbalkens herausfallen, da er nicht mehr eingeklemmt in der Schnittzone gehalten wird, so dass durch ihn keine weiteren und größeren Schäden an Messerklingen mehr verursacht werden können.

Nach einer Ausgestaltung der Erfindung ist in der Zulaufleitung des Hydraulikkreislaufs in Strömungsrichtung der Hydraulikflüssigkeit vor dem Umschaltventil ein Druckbegrenzungsventil angeordnet, das eine Entlastungsöffnung aufweist, die druckverbunden ist mit der Betätigungsvorrichtung zur Umschaltung des Umschaltventils. Wir der Auslöseschwellwert des Druckbegrenzungsventils durch einen Druckanstieg in der Zulaufleitung überschritten, tritt überschüssige Hydraulikflüssigkeit durch die Entlastungsöffnung aus dem Druckbegrenzungsventil in eine Druckleitung aus, die mit der Betätigungsvorrichtung des Umschaltventils verbunden ist. Der Druck der austretenden Hydraulikflüssigkeit wird in der Betätigungsvorrichtung dazu genutzt, das Umschaltventil zu betätigen, indem es aus einer ersten Schaltstellung in eine zweite Schaltstellung umgeschaltet wird. Es kann vorgesehen sein, die in der Druckleitung befindliche überschüssige Hydraulikflüssigkeit wieder in den Tank des Hydraulikkreislaufs zurückzuführen, damit die Druckleitung sofort wieder funktionsbereit ist für eine neue Schaltung.

Nach einer Ausgestaltung der Erfindung ist in der Zulaufleitung des Hydraulikkreislaufs in Strömungsrichtung der Hydraulikflüssigkeit vor dem Umschaltventil ein Drucksensor angeordnet, der mit der Betätigungsvorrichtung zur Umschaltung des Umschaltventils verbunden ist und der bei Überschreitung eines vorgewählten Schwellwerts ein Stellsignal an die Betätigungsvorrichtung übermittelt. Anstelle einer hydraulischen Schaltung des Umschaltventils kann die Umschaltung auch über einen Drucksensor ausgelöst werden, der beispielsweise eine elektronisches Stellsignal erzeugt, das von der elektrisch angetriebenen oder elektrisch geschalteten Betätigungsvorrichtung in eine Umschaltung des Umschaltventils umgesetzt wird.

Nach einer Ausgestaltung der Erfindung ist der Hydromotor über ein hydraulisches Mehrwegeventil zuschaltbar und abschaltbar. Um den Hydromotor ein- und ausschalten zu können, ist ein entsprechend schaltbares Hydraulikventil erforderlich.

Bei dem hydraulischen Mehrwegeventil, mit dem der Hydromotor ein- und ausschaltbar ist, kann es sich um das Umschaltventil handeln, das in einer zusätzlichen zu seinen für die Umkehr der Antriebsrichtung erforderlichen Schaltstellungen den Hydromotor zumindest von der Zulaufleitung trennt, um diesen abzuschalten.

Nach einer Ausgestaltung der Erfindung sind der Hydromotor, das Umschaltventil und das Druckbegrenzungsventil oder der Drucksensor mit einem ersten Teil des Hydraulikkreislaufs an dem Vorsatzgerät angeordnet und das Vorsatzgerät weist eine Schnittstelle auf, über die der erste Hydraulikkreislauf mit einem zweiten Teil des Hydraulikkreislaufs verbindbar ist, der sich in einer Erntemaschine befindet, an die das landwirtschaftliche Vorsatzgerät anbaubar ist. Bei dieser Verteilung der einzelnen Komponenten des Hydraulikkreislaufs können einerseits auf der Erntemaschine bereits vorhandene Komponenten wie beispielsweise die Hydropumpe und der Tank genutzt werden, die dann nicht das Vorsatzgerät unnötig verteuern und schwerer machen, und andererseits genau diejenigen Komponenten auf dem Vorsatzgerät angeordnet werden, die speziell für die Realisierung der Funktion der Bewegungsrichtungsumkehr erforderlich sind. Die Schnittstelle kann als hydraulische Kupplung ausgebildet sein, über die das Vorsatzgerät an den Hydraulikkreislauf der Erntemaschine anschließbar ist.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügte Zeichnung näher erläutert.

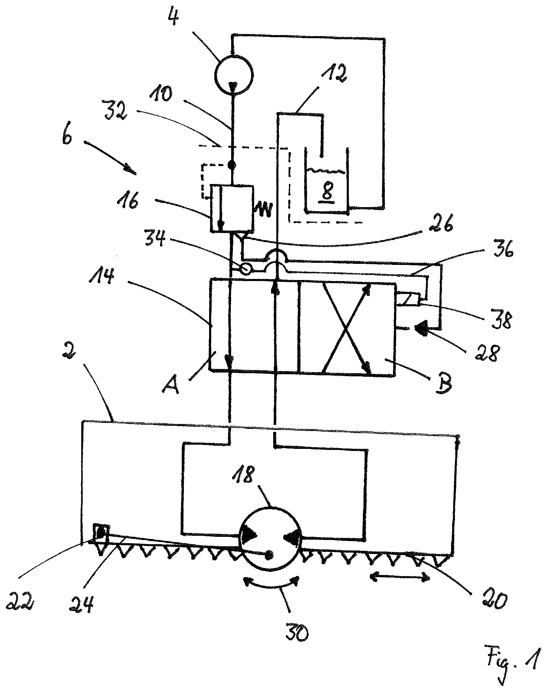

In Fig. 1 ist ein landwirtschaftliches Vorsatzgerät 2 gezeigt, das an eine zeichnerisch nicht dargestellte Erntemaschine angebaut werden kann. Bei dem landwirtschaftlichen Vorsatzgerät 2 kann es sich beispielsweise um ein Getreideschneidwerk oder ein Mähwerk handeln. An dem Vorsatzgerät 2 befindet sich ein Messerbalken 20, der bei der Ernte in den stehenden Bestand des Ernteguts hinein bewegt wird und der dabei die Halme des Ernteguts abschneidet. Das geschnittene Erntegut wird dann vom Vorsatzgerät eingezogen und an die zugehörige Erntemaschine abgefördert.

Das Vorsatzgerät 2 ist mit einem Hydraulikkreislauf 6 versehen, durch den eine Hydraulikflüssigkeit zirkuliert, die von der Hydropumpe 4 eingespeist wird. Die Hydraulikflüssigkeit wird von der Hydropumpe 4 aus dem Tank 8 angesaugt und in die Zulaufleitung 10 gepumpt. Über die Rücklaufleitung 12 wird die Hydraulikflüssigkeit wieder zum Tank 8 befördert, nachdem sie durch den Hydromotor 18 durchgelaufen ist.

Zwischen der Hydropumpe 4 und dem Tank 8 einerseits und dem Hydromotor 18 andererseits ist ein Umschaltventil 14 im Hydraulikkreislauf 8 vorgesehen. Der Hydromotor 18 ist darauf ausgelegt, in zwei Drehrichtungen 30 zu arbeiten. Je nach Drehrichtung bewegt der Hydromotor 18 den Messerbalken 20 über einen Exzentergetriebe 22 nach rechts oder nach links. Das Exzentergetriebe 22 besteht im Ausführungsbeispiel aus einer hydromotorseitigen Antriebsscheibe, einer exzentrisch mit der Antriebsscheibe verbundenen Koppelstange 24 und einem Lagerzapfen, der starr mit dem beweglichen Teil des Messerbalkens 20 verbunden ist. Über das Exzentergetriebe wird die rotatorische Bewegung der Antriebsscheibe in eine oszillierende Bewegung des beweglichen Teils des Messerbalkens 30 umgewandelt.

In welche Richtung sich der Hydromotor 18 dreht, hängt davon ab, in welcher Schaltstellung sich das Umschaltventil 14 befindet. In Figur 1 ist ein 4/2-Wegeventil gezeigt, bei dem der Hydromotor 18 in den beiden gezeigten Schaltstellungen A, B in jeweils entgegengesetzter Richtung angetrieben wird. Wird die Schaltstellung des Umschaltventils 14 von der Schaltstellung A in die Schaltstellung B oder umgekehrt verändert, ändert sich dadurch auch zwangsläufig unmittelbar die Bewegungsrichtung des beweglichen Teils des Messerbalkens 30.

Zwischen der Hydropumpe 4 und dem Umschaltventil 14 befindet sich in dem in Figur 1 dargestellten Ausführungsbeispiel ein Druckbegrenzungsventil 16 in der Zulaufleitung 10. Besteht in der Zulaufleitung 10 ein Druck, der einen voreingestellten Schwellwert überschreitet, öffnet sich eine Entlastungsöffnung 26, durch die Hydraulikflüssigkeit aus dem Druckbegrenzungsventil 16 austreten kann. Die aus dem Druckbegrenzungsventil 16 austretende Hydraulikflüssigkeit wirkt auf die Druckbetätigung 28, mit der das Umschaltventil 14 zwischen einer der Schaltstellungen A, B hin und her geschaltet wird. Tritt also in der Zulaufleitung 10 ein Überdruck auf, ändert sich automatisch die Drehrichtung des Hydromotors 18.

In Figur 1 ist die Schnittstelle 32 zwischen einem Vorsatzgerät 2 und einer Erntemaschine, an die das Vorsatzgerät 2 angebaut werden kann, durch eine gestrichelte Linie angedeutet. Bei der vorgeschlagenen Aufteilung befinden sich die Hydropumpe 4 und der Tank 8 auf der Erntemaschine, während die übrigen Komponenten des Hydraulikkreislaufs 6 am Vorsatzgerät 2 angeordnet sind.

Anstelle der Umschaltung des Umschaltventils 14 über das Druckbegrenzungsventil 16 ist es auch möglich, die Umschaltung des Umschaltventils 14 über einen Drucksensor 34 zu bewirken. Der Drucksensor 34 misst laufend den Druck, der in der Zulaufleitung 10 herrscht. Wird dabei die Überschreitung eines Schwellwerts erkannt, so meldet der Drucksensor 34 den Überdruck in der Zulaufleitung 10 über die Sensorleitung 36 an die elektrische Betätigung 38, die dann das Umschaltventil 14 umschaltet.

### Bezugszeichenliste

- 2: landwirtschaftliches Vorsatzgerät
- 4: Hydropumpe
- 6: Hydraulikkreislauf
- 8: Tank
- 10: Zulaufleitung
- 12: Rücklaufleitung
- 14: Umschaltventil
- 16: Druckbegrenzungsventil
- 18: Hydromotor
- 20: Messerbalken
- 22: Exzentergetriebe
- 24: Koppelstange
- 26: Entlastungsöffnung
- 28: Druckbetätigung
- 30: Drehrichtung
- 32: Schnittstelle
- 34: Drucksensor
- 36: Sensorleitung
- 38: elektrische Betätigung

## Patentansprüche

1. Landwirtschaftliches Vorsatzgerät (2) mit einem von einem Hydromotor (18) über ein Exzentergetriebe (22) oszillierend antreibbaren Messerbalken (20), wobei der Hydromotor (18) über eine Zulaufleitung (10) und eine Rücklaufleitung (12) an einen von einer Hydropumpe (4) mit einer hydrostatischen Flüssigkeit beaufschlagten Hydraulikkreislauf (6) anschließbar ist, wobei in den Hydraulikkreislauf (6) ein Umschaltventil (14) integriert ist, das zumindest zwei verschiedene Schaltstellungen (A, B) aufweist, zwischen denen das Umschaltventil (14) hin und her verstellbar ist, und der Hydromotor (18) in der ersten Schaltstellung (A) des Umschaltventils (14) in einer ersten Drehrichtung und in der zweiten Schaltstellung (B) des Umschaltventils (14) in einer der ersten Drehrichtung entgegengesetzten zweiten Drehrichtung angetrieben ist, **dadurch gekennzeichnet, dass** das Umschaltventil druckabhängig schaltend ist.

2. Landwirtschaftliches Vorsatzgerät (2) nach Anspruch 1, **dadurch gekennzeichnet, dass** in der Zulaufleitung (10) des Hydraulikkreislaufs (6) in Strömungsrichtung der Hydraulikflüssigkeit vor dem Umschaltventil (14) ein Druckbegrenzungsventil (16) angeordnet ist, das eine Entlastungsöffnung (26) aufweist, die druckverbunden ist mit der Betätigungsvorrichtung zur Umschaltung des Umschaltventils (14).

3. Landwirtschaftliches Vorsatzgerät (2) nach Anspruch 1, **dadurch gekennzeichnet, dass** in der Zulaufleitung (10) des Hydraulikkreislaufs (6) in Strömungsrichtung der Hydraulikflüssigkeit vor dem Umschaltventil (14) ein Drucksensor (34) angeordnet ist, der mit der Betätigungsvorrichtung (38) zur Umschaltung des Umschaltventils (14) verbunden ist und der bei Überschreitung eines vorgewählten Schwellwerts ein Stellsignal an die Betätigungsvorrichtung (38) übermittelt.

4. Landwirtschaftliches Vorsatzgerät (2) nach einem der vorhergehenden Ansprüche, **dadurch gekennzeichnet, dass** der Hydromotor (18) über ein hydraulisches Mehrwegeventil zuschaltbar und abschaltbar ist.

5. Landwirtschaftliches Vorsatzgerät (2) nach einem der vorhergehenden Ansprüche, **dadurch gekennzeichnet, dass** der Hydromotor (18), das Umschaltventil (14) und das Druckbegrenzungsventil (16) oder der Drucksensor (34) mit einem ersten Teil des Hydraulikkreislaufs (6) an dem Vorsatzgerät (2) angeordnet sind und das Vorsatzgerät (2) eine Schnittstelle (32) aufweist, über die der erste Hydraulickreislauf (6) mit einem zweiten Teil des Hydraulikkreislaufs (6) verbindbar ist, der sich in einer Erntemaschine befindet, an die das landwirtschaftliche Vorsatzgerät (2) anbaubar ist.

## Claims

1. Agricultural attachment (2) with a cutter bar (20) that can be driven in an oscillating manner by a hydraulic motor (18) via an eccentric gear mechanism (22), wherein the hydraulic motor (18) can be connected via a supply line (10) and a return line (12) to a hydraulic circuit (6) that is supplied with a hydrostatic fluid by a hydraulic pump (4), wherein a changeover valve (14) is integrated into the hydraulic circuit (6), which has at least two different switching positions (A, B) between which the changeover valve (14) can be adjusted back and forth, and the hydraulic motor (18) is driven in a first direction of rotation in the first switching position (A) of the changeover valve (14) and in a second direction of rotation opposite to the first direction of rotation in the second switching position (B) of the changeover valve (14), **characterized in that** the changeover valve switches in a pressure-dependent manner.

2. Agricultural attachment (2) according to Claim 1, **characterized in that** a pressure limiting valve (16) is arranged in the supply line (10) of the hydraulic circuit (6) upstream of the changeover valve (14) in the flow direction of the hydraulic fluid, the pressure limiting valve (16) having a relief opening (26) which has a pressure connection to the actuating device for changing over the changeover valve (14).

3. Agricultural attachment (2) according to Claim 1, **characterized in that** a pressure sensor (34) is arranged in the supply line (10) of the hydraulic circuit (6) upstream of the changeover valve (14) in the flow direction of the hydraulic fluid, the pressure sensor being connected to the actuating device (38) for changing over the changeover valve (14) and, when a preselected threshold value is exceeded, transmitting a control signal to the actuating device (38).

4. Agricultural attachment (2) according to one of the preceding claims, **characterized in that** the hydraulic motor (18) can be switched on and off via a hydraulic multiway valve.

5. Agricultural attachment (2) according to one of the preceding claims, **characterized in that** the hydraulic motor (18), the changeover valve (14) and the pressure limiting valve (16) or the pressure sensor (34) are arranged with a first part of the hydraulic circuit (6) on the attachment (2), and the attachment (2) has an interface (32), via which the first hydraulic circuit (6) can be connected to a second part of the hydraulic circuit (6), which is located in a harvesting machine to which the agricultural attachment (2) can be attached.

## Revendications

1. Outil adaptable agricole (2) comprenant une barre à couteaux (20) qui peut être entraînée en oscillation par un moteur hydraulique (18) par le biais d'une transmission excentrique (22),
le moteur hydraulique (18) pouvant être raccordé par le biais d'une conduite d'alimentation (10) et d'une conduite de retour (12) à un circuit hydraulique (6) alimenté en fluide hydrostatique par une pompe hydraulique (4),
une vanne de commutation (14) étant intégrée dans le circuit hydraulique (6), laquelle comporte au moins deux positions de commutation différentes (A, B) entre lesquelles la vanne de commutation (14) peut être déplacée suivant un mouvement alternatif, et le moteur hydraulique (18) étant entraîné dans un premier sens de rotation lorsque la vanne de commutation (14) est dans la première position de commutation (A) et dans un deuxième sens de rotation, opposé au premier sens de rotation, lorsque la vanne de commutation (14) est dans la deuxième position de commutation (B), **caractérisé en ce que** la vanne de commutation commute en fonction de la pression.

2. Outil adaptable agricole (2) selon la revendication 1, **caractérisé en ce qu'**une vanne de limitation de pression (16) est disposée dans la conduite d'alimentation (10) du circuit hydraulique (6) en amont de la vanne de commutation (14) dans le sens d'écoulement du fluide hydraulique, laquelle vanne de limitation de pression comporte une ouverture de décharge (26) qui est reliée sous pression au dispositif d'actionnement destiné à commuter la vanne de commutation (14).

3. Outil adaptable agricole (2) selon la revendication 1, **caractérisé en ce qu'**un capteur de pression (34) est disposé dans la conduite d'alimentation (10) du circuit hydraulique (6) en amont de la vanne de commutation (14) dans le sens d'écoulement du fluide hydraulique, lequel capteur de pression est relié au dispositif d'actionnement (38) destiné à commuter la vanne de commutation (14) et transmet un signal de commande au dispositif d'actionnement (38) lorsqu'une valeur seuil présélectionnée est dépassée.

4. Outil adaptable agricole (2) selon l'une des revendications précédentes, **caractérisé en ce que** le moteur hydraulique (18) peut être activé et désactivé par le biais d'une vanne hydraulique multivoies.

5. Outil adaptable agricole (2) selon l'une des revendications précédentes, **caractérisé en ce que** le moteur hydraulique (18), la vanne de commutation (14) et la vanne de limitation de pression (16) ou le capteur de pression (34) sont disposés avec une première partie du circuit hydraulique (6) sur l'outil adaptable (2) et l'outil adaptable (2) comporte une interface (32) par le biais de laquelle le premier circuit hydraulique (6) peut être relié à une deuxième partie du circuit hydraulique (6) qui se trouve dans une machine de récolte sur laquelle l'outil adaptable agricole (2) peut être monté.
